# EUROPEAN PATENT APPLICATION

(11) **EP 0 540 874 A2**
(43) Date of publication of application: **12.05.1993**
(21) Application number: 92116591.6
(22) Date of filing: 29.09.1992
(51) Int. Cl.: F25D 17/06, F25D 29/00

(54) **Operating and control device for a motor-driven fan in a refrigerator, particularly of the forced air circulation**

(30) Priority: 08.11.1991 IT MI912978
(71) Applicant: WHIRLPOOL EUROPE B.V., NL-5507 SK Veldhoven (NL)
(72) Inventor: Scaburri, Adriano, Whirlpool Italia s.r.l., I-21025 Comerio (VA) (IT); Rivis, Enzo, Whirlpool Italia s.r.l., I-21025 Comerio (VA) (IT)
(74) Representative: Melio, Jan Dirk

(57) **Abstract**

A refrigerator, such as a domestic refrigerator or the like, particularly of the forced air circulation type, comprises a cabinet having one or more temperature-controlled compartments (100), there being provided, at a compartment wall at which a usual evaporator (102) is situated, a fan (3) driven by a usual electric motor (2) connected at least to an electrical feed line (4) and arranged to circulate air through the evaporator (102) and ventilate the compartment or compartments via usual ducts (103) provided within said cabinet. Switch means (9) are provided in said line and are controlled by a control unit (17) which closes and opens them in such a manner as to vary the operating conditions of the fan (3) and in particular its speed, sensor means (10,50) being provided to generate a signal (V_{D}, V_{L}) relating to the fan operating conditions for comparison with a reference signal (V_{R}, V_{M}), said comparison generating a control signal (V_{H}) fed to the control unit (17), which on the basis of said signal (V_{H}) acts on the switch means (9) to adjust the fan operating conditions and in particular its speed.

## Description

This invention relates to an operating and control device for a fan in a refrigerator, particularly of forced air circulation type, comprising a cabinet having one or more temperature-controlled compartments for containing food during its preservation, there being provided, at a compartment wall at which a usual evaporator is situated, a fan driven by a usual electric motor connected to an electrical feed line and arranged to circulate air through the evaporator and ventilate the compartment or compartments via usual ducts provided within said cabinet.

In a refrigerator of the aforesaid type, various problems can arise if the the mains supply, to which the electrical members of the refrigerator are connected, undergoes voltage variation.

In particular, such variation affects the operation of the fan, which can no longer maintain a constant rotation speed such as to properly distribute and circulate the air within the refrigerator compartments.

In addition, as the fan rotation speed is generally constant, considerable problems can also arise when a large load is contained in the refrigerator compartments. This is because immediately after loading the refrigerator the temperature in its compartments rises, which can be dangerous for the preservation of the food already present in said compartments on loading.

Because of the constant rotation speed of the fan, the conditions within the refrigerator compartments return to the optimum conditions for food preservation only after a lengthy time period.

During this period the food can undergo alteration which makes it unusable.

Methods are known for overcoming the aforesaid drawbacks.

These methods are however complicated, are not highly reliable, and involve a certain installation and operating cost.

In addition, the electric motors used for driving such fans are generally of low power with a very low efficiency characteristic.

This indicates that a large part of the electric power fed to the motor from the mains is dispersed through dissipation due to saturation of the motor air gap.

Generally, the electric motors which drive fans in refrigerators of the aforesaid type are used at their maximum possible power to provide an air flow rate sufficient to ensure the usually required performance. This makes it impossible to generate a higher air flow rate when the refrigerator loading conditions change, ie when the introduction of a large number of food items results in an increase in the refrigerator temperature.

An object of the invention is to provide a device which obviates the aforesaid drawbacks.

A particular object of the invention is to provide a device which enables the rotation speed of the fan, ie the r.p.m. of the electric motor which rotates it, to be varied in accordance with varying refrigerator loading or varying mains conditions.

A further object is to provide a device which is of simple construction and reliable use, and enables the fan electric drive motor to be operated in such a manner as to provide a positive variation in the flow rate of the air circulating through the refrigerator, ie to provide a device which on increase in the refrigerator temperature (caused by a large load, by a high external ambient temperature, or by very frequent door opening) provides an increase in the rotation speed of the fan, ie of its drive motor.

A further object is to provide a device of the aforesaid type which results in reduced power consumption of the fan motor and optimization of the refrigerator temperature cycle, with consequent reduction in the refrigerator operating cost.

These and further objects which will be apparent to the expert of the art are attained by a device of the aforesaid type, characterised in that switch means are provided in the electrical feed line to the fan drive motor and are controlled by a control unit which closes and opens them in such a manner as to vary the operating conditions of the fan and in particular its speed, sensor means being provided to generate a signal relating to the fan operating conditions for comparison with a reference signal, said comparison generating a control signal fed to the control unit, which on the basis of said signal acts on the switch means to adjust the fan operating conditions and in particular its speed.

The present invention will be more apparent from the accompanying drawing, which is provided by way of non-limiting example and in which:
Figure 1 is a schematic representation of a first embodiment of the invention;
Figure 2 is a schematic representation of a second embodiment of the invention;
Figure 3 is a schematic representation of a modification to the embodiment of Figure 2; and
Figure 4 is a schematic representation of a refrigerator constructed in accordance with the invention.

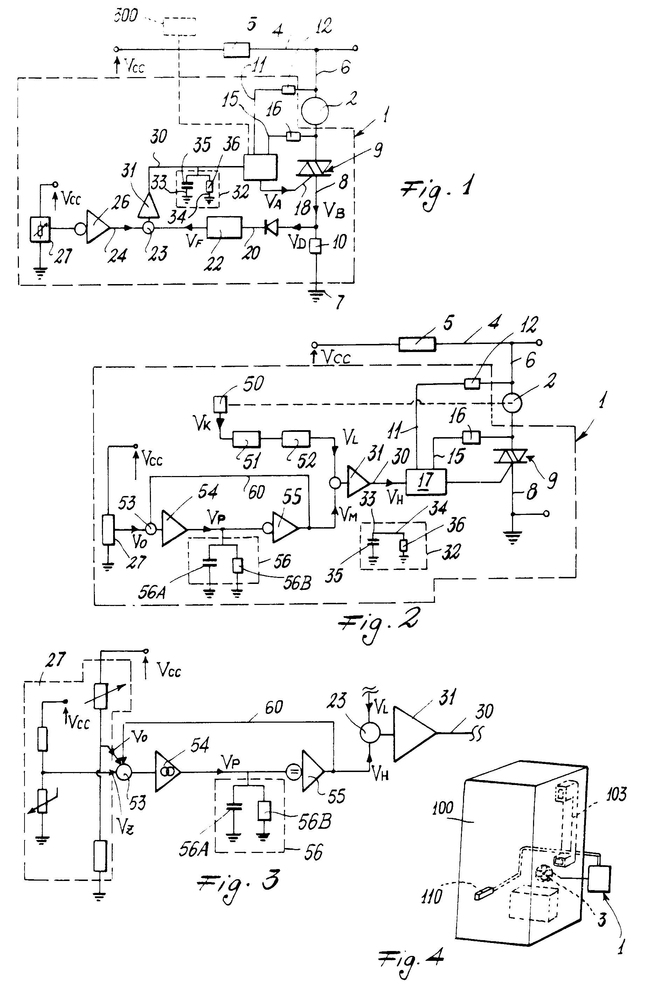

With reference to Figure 1, the device of the invention is indicated overall by 1 and is arranged to operate and control the motor 2 of a fan 3, powered via an electrical line 4. The fan 3 is located in a compartment 100 of a refrigerator (for example a domestic refrigerator) in a position corresponding with an evaporator 102, to convey air through a duct 103.

Said line comprises a usual protection and conversion block 5 for the dc feed voltage V_{**cc**}**.**

The electrical line is connected to the motor 2 via an electrical branch 6, the motor being connected to earth via an electrical branch 8 containing a static switch defined by a triac 9 and a resistor 10.

An electrical branch 11 comprising a resistor 12 is connected to the branch 6. A further branch 15 comprising a resistor 16 is connected to the branch 8 between the motor 2 and the triac 9.

The branches 11 and 15 terminate in a trigger circuit (or trigger) 17 connected to the gate 18 of the triac 9, this being a further static switch saturation circuit.

The branch 8 is connected to a further branch 20 comprising in succession a diode 21 and a usual integrator member 22 (or similar circuit). The branch 20 terminates in a known subtractor node 23 which also receives a further branch 24 comprising, starting from the node 23, an impedance separator amplifier or buffer 26 and a member 27 generating a reference signal (V_{**R**}). The member 27 can be a usual temperature probe or comprise a variable resistor (shown in the block which schematically defines the member 27) which is suitably adjusted to generate the required signal V_{**R**}.

The member 27 is connected to earth at 28 and to the voltage V_{**cc**} at 29.

From the node 23 there extends a branch 30 comprising a usual amplifier 31 and terminating in the trigger 17. To the branch 30 there is connected a damping member 32 defined for example by parallel lines 33 and 34 comprising respectively a capacitor 35 and a resistor 36.

The described circuit operates as follows.

During normal use of the refrigerator 100, the feed voltage V_{**cc**} reaches the motor 2 via the branches 4 and 6.

In known manner as described hereinafter, the trigger 17 then generates a signal V_{**A**} (generally of square wave) which closes the triac 9. The motor 2 therefore becomes connected to earth 7 so that it can be powered to operate the fan 3 (Figure 4), which hence rotates.

A signal V_{**B**} originating from the motor 2 is therefore present in the branch 8. This signal passes partly through the branch 20 and partly through the resistor 10 connected in series with said motor. This latter resistor is used to determine the mains current absorbed by the motor 2 and hence its r.p.m.

In the branch 20 there is therefore a signal V_{**D**} (sinusoidal) which reaches the integrator member 22 as a pulsating positive half-wave signal by virtue of the action of the diode 21 thereon. In known manner, the member 22 integrates the signal V_{**D**} and generates as output a continuous signal V_{**F**} directed towards the subtractor node 23.

This latter also receives the signal V_{**R**} generated by the member 27, defined for example by a variable resistor or potentiometer.

The signal V_{**F**} represents the required (preset) speed of the fan 3.

It generally consists of a dc voltage signal decoupled by the buffer 26.

A signal V_{**H**} given by the combination of the signals V_{**F**} and V_{**R**} leaves the node 23. The signal V_{**H**}, which represents the difference between the required preset speed (given by the signal V_{**R**}) and the actual speed (given by the signal V_{**F**}) can assume positive values (if the preset speed is greater than the actual speed) or negative values (if the preset speed is less than the actual speed). This signal is amplified by the amplifier 31.

The signal V_{**H**} is therefore a variable signal oscillating between positive and negative values. The oscillation is suitably damped by the member 32 which operates in known manner and introduces a predetermined damping constant such as to prevent instability of the device 1.

As stated, the trigger 17 controls the operation of the triac 9.

Its task is to generate the firing delay of the triac 9 on the basis of the signal V_{**H**}, synchronizing this delay with the moments in which the sinusoidal waves of the feed voltage and current of the motor 2 pass through their zero points. The trigger 17 determines these zero points via the branches 11 and 15.

The trigger therefore generates a firing or closure pulse for the triac 9 (ie the stated signal V_{**A**}) which is suitably gauged by said trigger, which repeats it if the triac does not close.

It will now be assumed that for some reason the feed voltage to the motor 2 varies, for example decreases.

Because of this the signal V_{**D**} also decreases.

Consequently there is a decrease in the signal V_{**F**} and an increase in the signal V_{**H**} leaving the subtractor node 23.

In this situation the trigger 17 senses the variation in the signal V_{**H**} and compensates this feed voltage variation, eg reduction, by varying the firing time of the triac 9 (in the case under examination, by increasing the duration of the signal V_{**A**}).

This results in an increase in the feed voltage to the motor 2 which consequently increases its r.p.m. to maintain the air circulation through the refrigerator 100 generated by the fan 3 constant.

Consequently, the device of Figure 1 immediately acts on the motor 2 and hence on the fan 3 whenever a mains voltage variation occurs, this action maintaining the fan rotation speed constant.

The same device can be used to increase the air circulation within the refrigerator 100 (and hence decrease the temperature in at least one of its compartments) if the temperature increases inside it following the introduction of a large load or if the usual refrigerator doors are opened a large number of times or for a long period.

In this case the member 27 generating the signal V_{**R**} is a usual temperature probe or a usual thermostat 110 located within the refrigerator compartment. The member or probe 27 generates a signal V_{**R**} which varies with the temperature measured within the refrigerator.

If this temperature varies for one of the aforesaid reasons, the signal V_{**R**} varies. For example, if the temperature within the refrigerator increases, the signal V_{**R**} decreases (the signal being generated in known manner).

The signal V_{**H**} consequently increases, and as in the previously described case the trigger 17 varies the firing time of the triac 9 by increasing it.

Consequently there is an increase in the feed voltage to the motor 2, which increases its r.p.m. The air flow rate through the refrigerator increases, to reduce the temperature within the refrigerator to the desired value.

Figure 2 shows a further embodiment of the invention. In this, parts corresponding to those of Figure 1 are indicated by the same reference numerals.

In this embodiment, the r.p.m. of the motor 2 is controlled not by evaluating its absorbed current but directly by a device able to provide r.p.m. data, such as a tachometer dynamo.

This is connected to the motor 2 to provide a square wave sinusoidal signal V_{**K**}. This signal, the frequency of which depends on the motor speed, is initially converted to voltage by a frequency/voltage converter 51 and is then integrated by a known integrator member 52 into a substantially continuous signal V_{**L**}.

This is necessary because the output signal from the converter 51 comprises characteristic oscillations which can negatively influence the proper operation of the device 1. The signal V_{**L**} is fed to the subtractor node 23.

This latter also receives a signal V_{**M**} originating from the member 27, which can comprise a usual potentiometer as in the case of the member 27 of Figure 1.

The member 27 is connected to an adder node 53 connected to a current generator 54. This latter is connected to a buffer 55 connected to the node 23. Between the buffer 55 and generator 54 there is a stabilizer member 56 identical to the aforesaid member 32.

The buffer 55 and generator undergo feedback via a branch 60 terminating in the node 53.

The device of Figure 2 is used identically to that of Figure 1.

Specifically, by means of the member 27 a reference value or signal V_{**M**} is chosen or determined, with which the signal V_{**L**} is compared. This member generates a continuous signal V_{**O**} which is used to control the generator 54. This latter generates a signal V_{**p**} which is suitably damped by the member 56 operating in known manner, which introduces a predetermined damping constant such as to prevent instability of the device 1.

The signal V_{**p**} is decoupled by the buffer 55 to hence define the signal V_{**M**}. The same signal V_{**p**} is also used in feedback through the branch 60 to limit the charging current of the member 56 (comprising, as in the case of the member 32, a capacitor 56A and a resistor 56B in parallel), by varying its intensity in a manner inversely proportional to the signal V_{**p**}.

The operation of the device of Figure 2 is analogous to that of Figure 1 and will therefore not be further described. It should however be noted that in the case under examination, the motor is controlled directly in the sense of controlling its r.p.m., which is maintained constant following any variation in the mains voltage or required torque.

Again in the case under examination, the member 27 can comprise a usual thermostat or a temperature probe.

Figure 3 schematically represents a further embodiment of the invention. In this figure, parts corresponding to those of Figure 2 are indicated by the same reference numerals.

In said figure, the member 27 comprises an NTC temperature sensor 200 which measures the effective temperature of the refrigerator compartment in which this sensor is located and generates a signal V_{**Z**}. This signal is compared in the node 53 with the feedback signal along the branch 60 and with the reference signal V_{**O**} generated by a potentiometer 201.

Said comparison generates a signal which causes the generator 54 to generate the signal V_{**p**}.

The use of the device of Figure 3 is analogous to that of the device shown in the previously described figures.

By comparing the signals V_{**Z**} and V_{**O**} at the node 53, a control signal for the generator 54 and hence a signal V_{**H**} proportional to the temperature within the refrigerator are obtained.

In this case, each variation in the refrigerator temperature is sensed by the device 1, which suitably controls the fan 3 to maintain the desired temperature within the refrigerator.

Particular embodiments of the invention have been described.

However, further embodiments are possible, all falling within the scope of the present document. For example, one such embodiment comprises a fan having a diameter greater than that of the fans usually used in refrigerators of the stated type (eg. 100 mm) or a fan with a variable blade geometry.

## Claims

1. An operating and control device for a motor-driven fan in a refrigerator, such as a domestic refrigerator or the like, particularly of forced air circulation type, comprising a cabinet having one or more temperature-controlled compartments for containing food during its preservation and fitted with their own access doors, there being provided, at a compartment wall at which a usual evaporator is situated, a fan driven by a usual electric motor connected to an electrical feed line and arranged to circulate air through the evaporator and ventilate the compartment or compartments via usual ducts provided within said cabinet, characterised in that switch means (9) are provided in said electrical feed line and are controlled by a control unit (17) which closes and opens them in such a manner as to vary the operating conditions of the fan (3) and in particular its speed, sensor means (10, 50) being provided to generate a signal (V_{**D**}, V_{**L**}) relating to the operating conditions of the fan (3) for comparison with a reference signal (V_{**R**}, V_{**M**}), said comparison generating a control signal (V_{**H**}) fed to the control unit (17), which on the basis of said signal (V_{**H**}) acts on the switch means (9) to adjust the operating conditions of the fan (3) and in particular its speed.

2. A device as claimed in claim 1, characterised in that the switch means (9) are at least one static switch, advantageously a triac.

3. A device as claimed in claim 2, characterised in that the control unit is a circuit (17) arranged to saturate the static switch, advantageously a trigger circuit.

4. A device as claimed in claim 1, characterised in that the sensor means are a member (10) for determining the current absorbed by the electric motor (2) of the fan (3) from the mains.

5. A device as claimed in claim 4, characterised in that the current determination member is a resistor (10).

6. A device as claimed in claim 1, characterised in that the sensor means are a member (50) for determining the r.p.m. of the electric motor (2) of the fan (3).

7. A device as claimed in claim 1, characterised in that the reference signal (V_{**R**}, V_{**M**}) is a static signal generated by a member (27) comprising a potentiometer or the like to be set to generate said signal as desired.

8. A device as claimed in claim 1, characterised in that the reference signal (V_{**R**}, V_{**M**}) is a variable signal generated by a member for measuring the temperature within the refrigerator.

9. A device as claimed in claim 3, characterised in that the control unit (17), via electrical branches (11, 15) connected to an electrical feed branch (6) for the motor (2), identifies the moments in which the motor feed voltage and current pass through their zero points, said identification enabling these moments to be synchronized with the time period for which said unit (17) acts on the static switch.

10. A device as claimed in claim 10, characterised by comprising at least one member (32) for damping the input signal (V_{**H**}) to the control unit (17).

11. A device as claimed in claim 1, characterised by comprising comparison means (23) for comparing the reference signal (V_{**R**}, V_{**M**}) with the signal (V_{**D**}, V_{**L**}) relating to the operating conditions of the fan (3), said comparison means being advantageously a subtractor node.
